# EUROPÄISCHE PATENTSCHRIFT

(11) **EP 4 040 585 B1**
(45) Veröffentlichungstag und Bekanntmachung des Hinweises auf die Patenterteilung: **08.10.2025**
(21) Anmeldenummer: 22152401.0
(22) Anmeldetag: 20.01.2022
(51) Int. Cl.: H01M 50/291, H01M 50/293, H01M 10/04, H01M 50/213, H01M 50/227, H01M 50/233, H01M 50/244, H01M 50/249, H01M 50/502

(54) **MODULGEHÄUSE, VERFAHREN ZUM HERSTELLEN EINES MODULGEHÄUSES UND BATTERIEMODUL**
MODULE HOUSING, METHOD FOR PRODUCING A MODULE HOUSING AND BATTERY MODULE
BOÎTIER DE MODULE, PROCÉDÉ DE FABRICATION D'UN BOÎTIER DE MODULE ET MODULE DE BATTERIE

(30) Priorität: 09.02.2021 DE 102021102975
(43) Veröffentlichungstag der Anmeldung: 10.08.2022
(73) Patentinhaber: Lisa Dräxlmaier GmbH, 84137 Vilsbiburg (DE)
(72) Erfinder: HOFER, Guido, 84187 Weng (DE); STECKEL, Michael, 84137 Vilsbiburg (DE); FALTERMEIER, Peter, 84028 Landshut (DE); ERLER, Andreas, 94315 Straubing (DE); HILMER, Klaus, 94348 Atting (DE); CEMIL, Sahin, 84137 Vilsbiburg (DE)

(56) Entgegenhaltungen:
- WO-A1-2020/094218
- CN-A- 106 252 549
- DE-A1- 102018 009 445
- DE-B3- 102014 002 165

## Beschreibung

### Technisches Gebiet

Die vorliegende Erfindung betrifft ein Modulgehäuse aus einem elektrisch isolierenden Kunststoffmaterial, ein Verfahren zum Herstellen eines solchen Modulgehäuses sowie ein Batteriemodul mit einem solchen Modulgehäuse.

### Stand der Technik

Die vorliegende Erfindung wird im Folgenden hauptsächlich in Verbindung mit Traktionsbatterien für Fahrzeuge beschrieben. Die Erfindung kann aber für jede Anwendung genutzt werden, in der Batteriemodule aus einzelnen Rundzellen zusammengesetzt werden sollen.

Um eine gewünschte elektrische Spannung des Batteriemoduls zu erreichen, kann eine Vielzahl von Rundzellen in einer Reihenschaltung verschaltet werden. Um eine gewünschte elektrische Kapazität des Batteriemoduls zu erreichen, können jeweils mehrere parallel geschaltete Rundzellen in Reihe geschaltet werden.

Um zwei Rundzellen in Reihe zu schalten, können sie axial aneinander ausgerichtet werden. Dabei wird immer der Pluspol der ersten Rundzelle mit dem Minuspol der zweiten Rundzelle verbunden. Im Allgemeinen sind die Pluspole mittig auf Stirnseiten der Rundzellen angeordnet, während die Zellbecher der Rundzellen die Minuspole ausbilden. Die Zellbecher der axial aneinander ausgerichteten Rundzellen dürfen sich also nicht berühren, um einen Kurzschluss der ersten Rundzelle zu verhindern.

Damit der Zellbecher der zweiten Rundzelle nicht in Kontakt mit dem Zellbecher der ersten Rundzelle kommt, kann herkömmlich eine Isolierscheibe zwischen den Rundzellen angeordnet werden. Die Isolierscheibe kann ein Loch für den Pluspol der ersten Rundzelle aufweisen. Die Isolierscheibe kann beispielsweise auf zumindest eine der beiden Rundzellen aufgeklebt werden.

Die Druckschrift DE 10 2014 002 165 B3 offenbart einen Zellenblock, welcher einen ersten Zellenträger und einen zweiten Zellenträger aufweist, welche die Zellen von gegenüberliegenden Seiten sandwichartig festhalten. Dazu sind die Zellen von einer Seite in Öffnungen des ersten Zellenträgers und von der gegenüberliegenden Seite in Öffnungen des zweiten Zellenträgers eingesteckt.

Die Druckschrift CN 106252549 A offenbart einen leichtgewichtigen sicheren Batteriezellenträger und ein Leistungsbatteriepaket. Gemäß dem leichten sicheren Batteriezellenträger ist ein Trägerhauptkörper ein nicht brennbarer geschäumter Block, der aus einem Makromolekülharz, einem Treibmittel, Glasfaser und Steinpulver durch chemisches Schäumen hergestellt wird, wobei Luftlöcher des nicht brennbaren geschäumten Blocks nach dem Schäumen gebildet werden, siehe Zusammenfassung der Druckschrift D2. In dem Batteriezellenträger sind Aussparungen angeordnet, in welchen Batteriezellen angeordnet sind.

Die Druckschrift DE 10 2018 009 445 A1 beschreibt ein Modul in welchem Zellen aufgenommen sind und durch einen oberen und einen unteren Halterahmen in einer Zellmatrix gehalten werden. Die untere und obere Seite der Halterahmen werden durch Metalldeckel abgeschlossen, wobei der untere Metalldeckel als Wärmeleitplatte zur Abführung der Abwärme mittels Luft oder Wasserkühlung dient. Die Metalldeckel haben dabei keine tragende Funktion, diese wird ausschließlich durch die Halterahmen gewährleistet.

Die Druckschrift WO 2020/094218 A1 offenbart einen Zellverbinder zum elektrisch leitenden Verbinden von Rundzellen einer Batterie für ein Kraftfahrzeug, mit mehreren elektrisch leitenden Kontaktelementen zum Verbinden von jeweils zwei Rundzellen Zellen in Reihenschaltung auf der Stirnseite. Die Rundzellen sind in jeweiligen Durchgangsöffnungen eines jeweiligen Modulgehäuses angeordnet und je Modulgehäuse sind jeweilige Zellkappen der Rundzellen stoffschlüssig mit zumindest einem der Zellverbinder verbunden.

### Beschreibung der Erfindung

Eine Aufgabe der Erfindung ist es daher, unter Einsatz konstruktiv möglichst einfacher Mittel ein verbessertes Modulgehäuse, ein verbessertes Verfahren zum Herstellen eines solchen Modulgehäuses sowie ein verbessertes Batteriemodul mit einem solchen Modulgehäuse bereitzustellen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein.

Durch den hier vorgestellten Ansatz können parallel angeordnete Rundzellen in allen Raumrichtungen definiert gehalten werden und zusätzlich die als Minuspol verwendeten Zellbecher von in Reihe miteinander verbundenen Rundzellen voneinander elektrisch isoliert werden, um Kurzschlüsse zu verhindern. Auf einen separaten Isolator kann dabei verzichtet werden.

Es wird ein Modulgehäuse aus einem elektrisch isolierenden Kunststoffmaterial mit einem Schaumkörper aus einem elektrisch isolierenden Schaummaterial vorgeschlagen, wobei der Schaumkörper im Wesentlichen zylindrische Aufnahmen für Rundzellen aufweist, wobei das Modulgehäuse an den Aufnahmen ausgerichtete axiale Anschläge für Zellbecher der Rundzellen und Aussparungen für Pluspole der Rundzellen aufweist.

Weiterhin wird ein Batteriemodul mit zumindest einem Modulgehäuse gemäß dem hier vorgestellten Ansatz vorgeschlagen, wobei pro Aufnahme eine Rundzelle im Schaumkörper angeordnet ist, wobei Zellbecher der Rundzellen an einer Innenseite der Anschläge anliegen und Pluspole der Rundzellen in den Aussparungen angeordnet sind, wobei auf einer Außenseite der Anschläge Zellverbinder anliegen, die elektrisch leitend mit den Pluspolen verbunden sind, wobei die Zellverbinder durch die Anschläge von den Zellbechern elektrisch isoliert sind. Die Aufnahmen für die Rundzellen sind im Wesentlichen zylindrisch, d.h. es handelt sich um eine zylindrische Aufnahme, ungeachtet üblicher Toleranzen.

Ferner wird ein Verfahren zum Herstellen eines solchen Modulgehäuses vorgeschlagen, wobei das Modulgehäuse mit den Anschlägen und Aussparungen aus einem elektrisch isolierenden Kunststoffmaterial gefertigt wird und der Schaumkörper mit den Aufnahmen in einem Schäumwerkzeug aus einem elektrisch isolierenden Schaummaterial geschäumt wird.

Eine Rundzelle kann eine zylindrische Batteriezelle sein. Die Rundzelle kann einen Zellbecher aufweisen, der eine Rolle aus mehreren elektrisch wirksamen Schichten umschließt. Im Zentrum beziehungsweise Kern der Rolle kann der Pluspol der Rundzelle angeordnet sein. Der Zellbecher kann den Minuspol der Rundzelle ausbilden.

Ein Batteriemodul kann ein Zusammenschluss vieler Rundzellen in einem Gehäuse sein. Das Batteriemodul kann zwei Anschlussterminals aufweisen, mit denen die Rundzellen elektrisch verbunden sind. Die Rundzellen können zwischen den Anschlussterminals elektrisch in Reihe geschaltet sein, wobei jeweils immer zumindest ein Pluspol mit zumindest einem Minuspol einer anderen Rundzelle verbunden ist. Die Pluspole und Minuspole können durch die Zellverbinder miteinander verbunden sein. Ebenso können die Rundzellen elektrisch parallelgeschaltet sein, wobei die Pluspole von zumindest zwei Rundzellen miteinander verbunden sind und die Minuspole der Rundzellen ebenfalls miteinander verbunden sind. Die Pluspole beziehungsweise Minuspole können unter Verwendung der Zellverbinder elektrisch miteinander verbunden sein.

Ein Modulgehäuse kann ein tragendes Teil des Batteriemoduls sein. Das Modulgehäuse kann eine Ausrichtung und Lage der Rundzellen im Batteriemodul bestimmen. Ebenso kann das Modulgehäuse eine elektrische Verschaltung der Rundzellen bestimmen. Das Batteriemodul kann mehrere gleichartige Modulgehäuse aufweisen. Beispielsweise können Rundzellen innerhalb eines Modulgehäuses in zumindest einer Gruppe parallelgeschaltet sein. Die Gruppen mehrerer Modulgehäuse können dann in Reihe geschaltet sein.

Das Modulgehäuse kann die Zellbecher zumindest der in Reihe geschalteten Rundzellen voneinander isolieren. Die Anschläge weisen dabei eine doppelte Funktionalität auf, indem sie als Anschlagfläche zum Bestimmen der Lage der Rundzellen dienen. Gleichzeitig weisen die Anschläge eine an die zu isolierende Spannung angepasste Materialstärke auf, um einen Abstand zwischen den Minuspolen der in Reihe geschalteten Rundzellen sicherzustellen.

Ein elektrisch isolierendes Kunststoffmaterial kann ein spritzgussfähiger Thermoplast sein. Dann kann das Modulgehäuse in einem Spritzgusswerkzeug gefertigt werden. Die Anschläge und Aussparungen können im Spritzgusswerkzeug ausgeformt sein. Alternativ kann das Modulgehäuse in einem Tiefziehwerkzeug gefertigt werden. Die Anschläge und Aussparungen können anschließend gestanzt werden. Ein Schaummaterial kann ein Mehrkomponenten-Kunststoff sein. Das Schaummaterial kann im Schäumwerkzeug aufschäumen und einen Formhohlraum ausfüllen. Das Schaummaterial ist porös und kann offenporig oder geschlossenporig sein.

Das Modulgehäuse kann mit den Anschlägen voraus in dem Schäumwerkzeug angeordnet werden. Das Schaummaterial kann in einen Innenraum des Modulgehäuses dosiert werden. Das Modulgehäuse kann nach einer Reaktion des Schaummaterials mit dem Schaumkörper aus dem Schäumwerkzeug entnommen werden. Die Aufnahmen abbildende Schäumkerne des Schäumwerkzeugs können durch die Aussparungen aus den Aufnahmen gezogen werden. Schäumkerne können Platzhalter für die Aufnahmen sein. Das Schaummaterial kann rund um die Schäumkerne aufschäumen und die Schäumkerne dabei abformen. Die Schäumkerne können beim Anordnen des Modulgehäuses im Schäumwerkzeug durch die Aussparungen eingeführt werden. Die Schäumkerne können eine Querschnittsfläche der Aussparungen aufweisen. Das Schäumwerkzeug kann durch einen im Wesentlichen flachen Deckel verschlossen werden. Das Schaummaterial kann im Wesentlichen drucklos reagieren. Das Schaummaterial kann durch Außenwände beziehungsweise Seitenwände des Modulgehäuses von Wänden des Schäumwerkzeugs ferngehalten werden. Das Schäummaterial kann sich mit den Wänden des Modulgehäuses verbinden.

Ein Durchmesser der Aussparungen kann kleiner als ein Durchmesser der Zellbecher sein. Der Durchmesser der Aussparungen kann größer als ein Durchmesser des Pluspols sein. Der Anschlag kann ringförmig um die Aussparung umlaufen und den Zellbecher vollständig verdecken.

Alternativ dazu kann der Durchmesser der Aussparungen größer als der Durchmesser der Zellbecher sein. Pro Aussparung können mehrere Anschläge in die Aussparung ragen. Eine lichte Weite zwischen den Anschlägen kann kleiner als der Durchmesser der Zellbecher sein. Die lichte Weite kann größer als der Durchmesser des Pluspols sein. Die Anschläge sind keiner großen mechanischen Belastung ausgesetzt. Zum Positionieren der Rundzelle ist nur eine kleine Kontaktfläche erforderlich.

Die Zellverbinder können auf einer den Rundzellen abgewandten Seite kronenförmig ausgerichtete Kontaktfedern aufweisen. Zwischen einer Kontaktfeder und dem Zellbecher kann je ein Anschlag angeordnet sein. Die Anschläge können an bestimmten Stellen rund um die Aufnahme angeordnet sein. Kontaktfedern können rund um den Pluspol der Rundzelle angeordnet sein. Die Kontaktfedern können dazu ausgebildet sein, am Zellbecher der nächsten Rundzelle der Reihenschaltung elektrischen Kontakt herzustellen. Dadurch sind die Kontaktfedern zwischen den beiden zu verbindendenden Rundzellen angeordnet. Die Anschläge verhindern zuverlässig den Kontakt zwischen dem Zellbecher der ersten Rundzelle und den Kontaktfedern.

Ein Durchmesser der Aufnahmen kann größer als der Durchmesser der Zellbecher sein. Erfindungsgemäß weist der

Schaumkörper pro Aufnahme mehrere axial entlang der Aufnahme verlaufende Quetschrippen auf. Eine lichte Weite zwischen den Quetschrippen kann kleiner als der Durchmesser der Zellbecher sein. Eine Quetschrippe kann eine Erhebung auf einer Oberfläche der Aufnahme sein. Die Quetschrippen können rund um die Aufnahme verteilt angeordnet sein. Insbesondere können die Quetschrippen an den Anschlägen ausgerichtet sein. Die Quetschrippen können durch die Schäumkerne geformt werden.

Das Modulgehäuse kann an den Aufnahmen ausgerichtete Durchgangsöffnungen für die Rundzellen aufweisen. Ein Anschlag und eine Durchgangsöffnung können je auf entgegengesetzten Seiten einer Aufnahme angeordnet sein. Ein Durchmesser der Durchgangsöffnungen kann größer als der Durchmesser der Zellbecher sein. Die Durchgangsöffnungen können den Schaumkörper verstärken.

Das Modulgehäuse kann zwei gleichartige Gehäusehälften aufweisen. Der Schaumkörper kann zwischen den Gehäusehälften angeordnet sein. In jeder Gehäusehälfte können die Anschläge und die Durchgangsöffnungen in Reihen nebeneinander angeordnet sein. Dabei können sich jeweils Reihen von Anschlägen und Durchgangsöffnungen abwechseln. In den abwechselnden Reihen können die Rundzellen gegengleich angeordnet sein. Aus jeder Durchgangsöffnung kann eine Rundzelle mit ihrem Minuspol ragen. In jeder Aussparung kann ein Pluspol angeordnet sein. Durch die Abwechselnde Ausrichtung der Reihen kann eine Reihenschaltung der Rundzellen der verschiedenen Reihen einfach hergestellt werden. Die Rundzellen einer Reihe können parallelgeschaltet sein.

Das Modulgehäuse kann zumindest eine auf einer Gehäuseseite angeordnete Verbindungskontur zum Verbinden mit einem gleichartig ausgeführten weiteren Modulgehäuse aufweisen. Durch die Verbindungskontur können mehrere Modulgehäuse hintereinander beziehungsweise nebeneinander beziehungsweise übereinander angeordnet werden. Die Verbindungskontur greift in eine entsprechende komplementäre Verbindungskontur eines anderen Modulgehäuses ein. Durch die Verbindungskontur werden die Modulgehäuse aneinander ausgerichtet. Dabei werden auch die Rundzellen im Modulgehäuse aneinander ausgerichtet.

### Kurze Figurenbeschreibung

Nachfolgend wird ein vorteilhaftes Ausführungsbeispiel der Erfindung unter Bezugnahme auf die begleitenden Figuren erläutert. Es zeigen:
Fig. 1 eine Darstellung eines Modulgehäuses gemäß einem Ausführungsbeispiel;
Fig. 2 eine räumliche Darstellung eines Batteriemoduls gemäß einem Ausführungsbeispiel;
Fig. 3 eine Schnittdarstellung eines Details eines Batteriemoduls gemäß einem Ausführungsbeispiel;
Fig. 4 eine Darstellung eines Modulgehäuses gemäß einem Ausführungsbeispiel;
Fig. 5 eine Darstellung eines Batteriemoduls gemäß einem Ausführungsbeispiel; und
Fig. 6 eine räumliche Darstellung eines Schäumwerkzeugs mit einem Modulgehäuse gemäß einem Ausführungsbeispiel.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

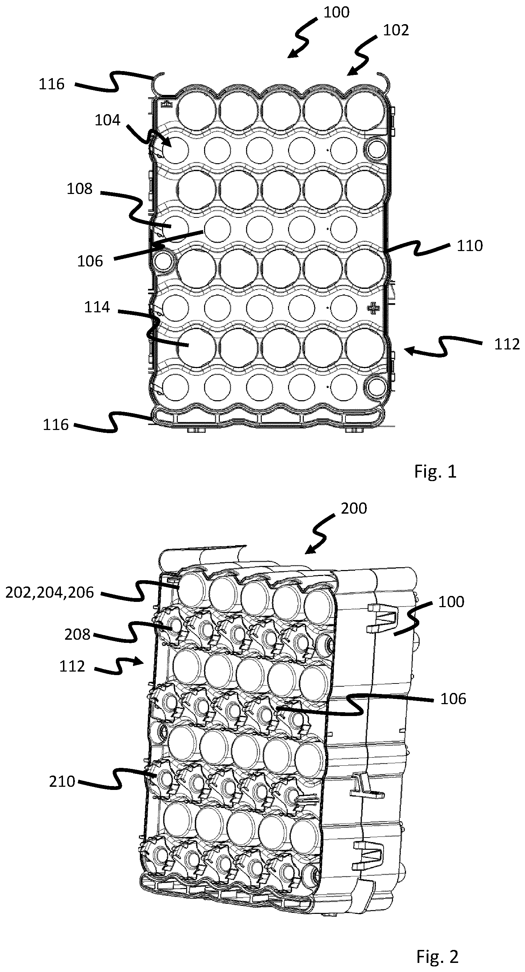

Fig. 1 zeigt eine Darstellung eines Modulgehäuses 100 gemäß einem Ausführungsbeispiel. Das Modulgehäuse 100 besteht aus einem elektrisch isolierenden Kunststoffmaterial. Das Modulgehäuse 100 ist ein Spritzgussteil. In dem Modulgehäuse 100 ist ein Schaumkörper 102 aus einem elektrisch isolierenden Schaummaterial angeordnet. Der Schaumkörper 102 weist eine Vielzahl von Aufnahmen 104 für Rundzellen auf. Die Aufnahmen 104 sind insbesondere so dicht wie möglich angeordnet. Eine Aufnahme 104 ist dabei eine von einer Seite des Schaumkörpers 102 bis zu einer gegenüberliegenden Seite des Schaumkörpers 102 durchgehende zylindrische Aussparung mit einem an eine Größe der Rundzelle angepassten Durchmesser. Die Aufnahmen 104 sind also parallel ausgerichtete Bohrungen durch den Schaumkörper 102 in einer hexagonalen Packung.

Das Modulgehäuse 100 weist an den Aufnahmen 104 ausgerichtete Anschläge 106 auf. Die Anschläge 106 weisen je eine Aussparung 108 auf. Wenn eine Rundzelle in einer Aufnahme 104 angeordnet wird, wird die Rundzelle mit dem Pluspol voran in die Aufnahme 104 eingeschoben, bis ein Zellbecher der Rundzelle an dem Anschlag 106 der Aufnahme 104 anliegt. Die Rundzelle kann dann nicht weitergeschoben werden. Die Aufnahme 104 fixiert die Rundzelle dabei in radialer Richtung. Der Anschlag 106 fixiert die Rundzelle in axialer Richtung. Der Pluspol ist innerhalb der Aussparung 108 angeordnet und kann von außen mit einem Zellverbinder kontaktiert werden. Der Anschlag 106 verdeckt den Zellbecher zumindest an den Stellen, an denen der Zellverbinder angeordnet ist.

Hier sind die Aussparungen 108 kreisrund und weisen einen geringeren Durchmesser auf, als die Aufnahmen 104. Die Anschläge 106 sind somit kreisringförmig um die Aussparungen 108 angeordnet.

In einem weiteren Ausführungsbeispiel wird die die Rundzelle mit dem Minuspol voran in die Aufnahme 104 eingeschoben, mit einer entsprechenden Anpassung der elektrischen Kontaktierung.

In einem Ausführungsbeispiel ist das Modulgehäuse 100 zweigeteilt, wobei hier nur eine der Gehäusehälften 110 dargestellt ist. Dabei ist das Modulgehäuse 100 dazu ausgebildet, jeweils gegengleich ausgerichtete Rundzellen aufzunehmen. Dazu sind die Aufnahmen 104 in Reihen 112 gruppiert. Die Gehäusehälfte 110 weist nur in jeder zweiten Reihe 112 Anschläge 106 auf. In den anderen Reihen 112 sind die Anschläge 106 in der anderen, hier nicht dargestellten Gehäusehälfte 110 angeordnet. In den Reihen 112 ohne Anschläge 106 weist die Gehäusehälfte 110 Durchgangsöffnungen 114 auf. Die Durchgangsöffnungen 114 weisen einen größeren Durchmesser als die Rundzellen auf.

In einem Ausführungsbeispiel weist das Modulgehäuse 100 an zumindest einer Seite eine Verbindungskontur 116 zum Verbinden mit einem insbesondere gleichartigen weiteren Modulgehäuse auf. Hier sind unterschiedliche Verbindungskonturen an den in der Darstellung oberen und unteren Seiten angeordnet. Die Verbindungskonturen 116 sind dabei komplementär zueinander.

Fig. 2 zeigt eine räumliche Darstellung eines Batteriemoduls 200 gemäß einem Ausführungsbeispiel. Das Batteriemodul 200 weist ein der Fig. 1 entsprechendes Modulgehäuse 100 auf. Hier sind Rundzellen 202 in den Aufnahmen des zweiteiligen Modulgehäuses 100 angeordnet. Die Rundzellen 202 sind dabei jeweils reihenweise gegengleich in die Aufnahmen eingeschoben, sodass jeweils in jeder zweiten Reihe 112 die Zellbecher 204 der Rundzellen 202 als Minuspole 206 aus den Aufnahmen hervorstehen und in den anderen Zeilen Pluspole 208 der Rundzellen 202 in den Aussparungen angeordnet sind und die Zellbecher 204 an den Anschlägen 106 anliegen. Die Pluspole 208 einer Reihe 112 sind jeweils mit einem Zellverbinder 210 elektrisch leitend miteinander verbunden. Die Anschläge 106 isolieren dabei den Zellverbinder 210 von den Zellbechern 204. Die Rundzellen 202 sind in dem dargestellten Ausführungsbeispiel 21700er Zellen mit einem nominalen Durchmesser von 21 Millimetern und einer nominellen Länge von 700 Millimetern. In einem weiteren Ausführungsbeispiel kann es sich um andere Rundzellen handeln.

Wenn ein weiteres Batteriemodul auf das dargestellte Batteriemodul 200 aufgesetzt wird, kontaktieren die mit den Pluspolen 208 verbundenen Zellverbinder 210 die freiliegenden Minuspole 206 des anderen Batteriemoduls 100 und verbinden die Rundzellen 202 der jeweils aneinander ausgerichteten Reihen 112 in einer elektrischen Reihenschaltung miteinander.

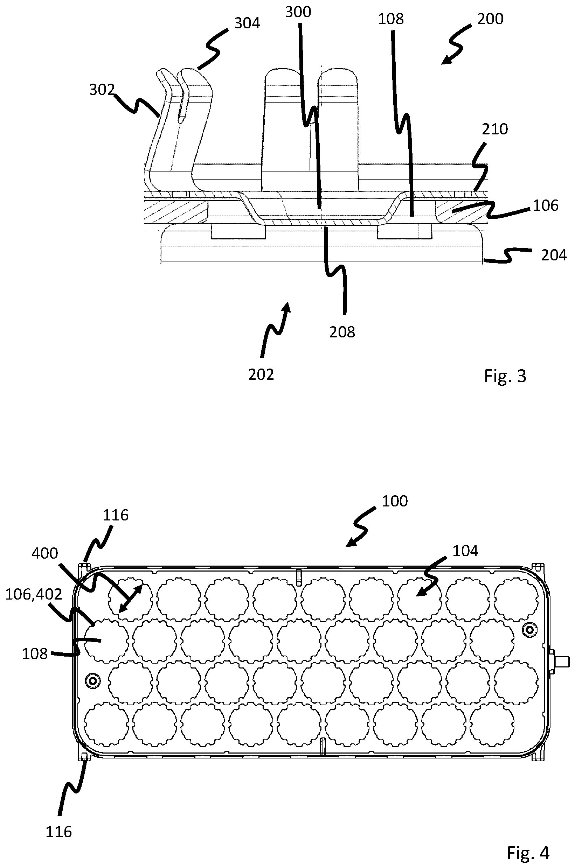

Fig. 3 zeigt eine Schnittdarstellung eines Details eines Batteriemoduls 200 gemäß einem Ausführungsbeispiel. Das Batteriemodul 200 entspricht dabei im Wesentlichen dem Batteriemodul 200 in Fig. 2. Hier ist dargestellt, wie der Zellbecher 204 einer Rundzelle 202 an dem Anschlag 106 des Modulgehäuses 100 anliegt und der Pluspol 208 in der Aussparung 108 angeordnet ist. Der Zellverbinder 210 ist mit dem Pluspol 208 elektrisch leitend verbunden. Der Zellverbinder 210 weist im Bereich des Pluspols 208 dazu eine Prägung 300 auf, die zusammen mit dem Überstand des Pluspols 208 gegenüber dem Zellbecher 204 beziehungsweise einem Zellmantel eine Materialstärke des Anschlags 106 überbrückt. Beispielsweise sind der Pluspol 208 und die Prägung 300 miteinander verschweißt. Der Anschlag 106 ist als Isolator zwischen dem Zellbecher 204 und dem Zellverbinder 210 angeordnet und verhindert einen Kurzschluss der Rundzelle 202. Der Anschlag 106 ist so dimensioniert, dass er die für die Zellspannung erforderliche Luftstrecke und Kriechstrecke zwischen dem Zellverbinder 210 und dem Zellbecher 204 bereitstellt.

In einem Ausführungsbeispiel weist der Zellverbinder 210 auf einer von dem Batteriemodul 200 abgewandten Seite Kontaktfedern 302 auf. Die Kontaktfedern 302 sind aus einer Hauptebene des Zellverbinders 210 aufgebogen und dazu ausgebildet, den Zellbecher einer anderen Rundzelle am Umfang zu kontaktieren. Dazu weisen die Kontaktfedern 302 Einführschrägen 304 auf, über die der Zellbecher beim Zusammenfügen von zwei Batteriemodulen 200 rutscht. Durch die Einführschrägen 304 werden die Kontaktfedern 302 elastisch nach außen gebogen und üben so eine radiale Anpresskraft auf den Zellbecher aus.

Fig. 4 zeigt eine Darstellung eines Modulgehäuses 100 gemäß einem Ausführungsbeispiel. Das Modulgehäuse 100 weist wie das Modulgehäuse in Fig. 1 in hexagonaler Packung angeordnete Aufnahmen 104 für Rundzellen auf. Die Aussparungen 108 im Modulgehäuse 100 weisen hier den Durchmesser der Aufnahmen 104 auf. Um den Umfang jeder Aussparung 108 sind hier mehrere Anschläge 106 verteilt angeordnet. Die Anschläge 106 sind näherungsweise halbkreisförmig und ragen in die Aussparung 108 hinein. Eine lichte Weite 400 zwischen Spitzen der Anschläge 106 ist geringer als der Durchmesser der Aussparung 108 beziehungsweise kleiner als der Durchmesser der Rundzellen.

Die Anschläge 106 sind dabei bezogen auf die Aussparungen 108 als analoge Zifferblätter bei 0:30, 1:30, 3:00, 4:30, 5:30, 6:30, 7:30, 9:00, 10:30 und 11:30 Uhr angeordnet. In einem weiteren Ausführungsbeispiel kann es sich um eine abweichende, insbesondere symmetrische, Anordnung handeln.

In einem Ausführungsbeispiel sind die Durchmesser der Aufnahmen 104 und damit die Durchmesser der Aussparungen 108 geringfügig größer als die Durchmesser der Rundzellen. Dafür weist der Schaumkörper 102 in Verlängerung der Anschläge 106 Quetschrippen 402 auf, die axial entlang der Wände der Aufnahmen 104 verlaufen. Eine lichte Weite 400 zwischen den Spitzen der Quetschrippen 402 ist kleiner als der Durchmesser der Rundzellen. Die Quetschrippen 402 werden beim Einschieben der Rundzellen zumindest teilelastisch gequetscht und halten die Rundzellen so sicher in radialer Richtung. Durch das Quetschen entsteht ein Anpressdruck der Quetschrippen 402 am Zellbecher. Die Quetschrippen 402 stellen dabei ein beim Einschieben quetschbares Volumen bereit. Das Volumen der Quetschrippen 402 ist kleiner als ein zu verdrängendes Volumen einer zylindrischen Aussparung mit einer entsprechenden lichten Weite 400, insbesondere wesentlich kleiner. Durch die Quetschrippen 402 ist die Fixierung der Rundzellen weniger toleranzanfällig als mit einer zylindrische Aussparung alleine. Selbst unter Berücksichtigung aller vorgegebenen Toleranzen verändert sich das quetschbare Volumen zwischen einem maximalen Quetschfall und einem minimalen Quetschfall nur im Verhältnis von 1,67:1. In einem weiteren Ausführungsbeispiel kann es sich um ein anderes Verhältnis handeln.

Das Modulgehäuse 100 weist wie das Modulgehäuse in Fig. 1 auf zwei gegenüberliegenden Seite komplementäre Verbindungskonturen 116 zum Verbinden mit einem gleichartigen Modulgehäuse auf.

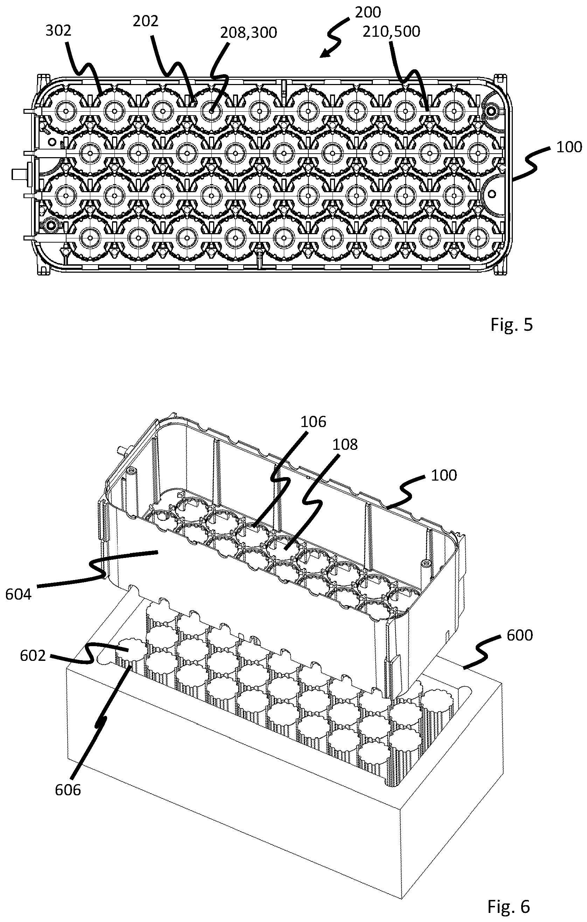

Fig. 5 zeigt eine Darstellung eines Batteriemoduls 200 gemäß einem Ausführungsbeispiel. Das Batteriemodul 200 weist das Modulgehäuse 100 aus Fig. 4 auf. Die Rundzellen 202 sind im Gegensatz zu der Darstellung in Fig. 2 alle von der gleichen Seite und gleich ausgerichtet in die Aufnahmen eingeschoben, bis sie an den Anschlägen anliegen. Dadurch sind die Pluspole 208 und Zellverbinder 210 alle auf der gleiche Seite des Batteriemoduls 200 angeordnet.

Die Zellverbinder 210 weisen wie in Fig. 3 Prägungen 300 und Kontaktfedern 302 auf. Dabei weisen die Zellverbinder 210 pro Rundzelle 202 eine Prägung 300 und acht Kontaktfedern 302 auf. Die Kontaktfedern 302 sind über den Anschlägen bei 0:30, 1:30, 4:30, 5:30, 6:30, 7:30, 10:30 und 11:30 Uhr angeordnet. Über den Anschlägen bei 3:00 und 9:00 Uhr sind Verbindungsstege 500 zwischen benachbarten Pluspolen angeordnet. Insbesondere sind die Kontaktfedern 302 möglichst genau über den Anschlägen angeordnet.

Fig. 6 zeigt eine räumliche Darstellung eines Schäumwerkzeugs 600 mit einem Modulgehäuse 100 gemäß einem Ausführungsbeispiel. Das Modulgehäuse 100 entspricht im Wesentlichen dem Modulgehäuse 100 in Fig. 4. Hier ist im Modulgehäuse noch kein Schaumkörper angeordnet. Der Schaumkörper wird unter Verwendung des Schäumwerkzeugs 600 geschäumt. Das Modulgehäuse 100 wird vor dem Schäumen in einem Spritzgusswerkzeug aus einem elektrisch isolierenden Kunststoffmaterial spritzgegossen. Anschließend wird das Modulgehäuse 100 mit den Aussparungen 108 und den Anschlägen 106 voran in das Schäumwerkzeug 600 eingelegt. Dabei wird durch jede Aussparung 108 ein Schäumkern 602 des Schäumwerkzeugs 600 in das Modulgehäuse 100 eingeführt. Seitenwände 604 des Modulgehäuses 100 werden durch Seitenwände des Schäumwerkzeugs 600 abgestützt. Die Schäumkerne 602 sind Platzhalter für die Aufnahmen des Schaumkörpers. Die Schäumkerne 602 sind im Wesentlichen zylindrisch und im Wesentliche so lang, wie das Modulgehäuse 100 hoch ist. Die Schäumkerne 602 weisen, um eingeführt werden zu können, den Aussparungen 108 entsprechende Querschnittsflächen auf. Die Querschnittsflächen bilden auch die Anschläge 106 ab. Dadurch dichten die Schäumkerne 602 das Modulgehäuse 100 an den Aussparungen 108 und Anschlägen 106 ab und innerhalb der Seitenwände 604 des Modulgehäuses 100 entsteht ein oben offener, abgedichteter Formhohlraum. Die Anschläge 106 sind an den Schäumkernen 602 als axial verlaufende Nuten 606 abgebildet. Die Nuten 606 werden beim Schäumen im Schaummaterial abgebildet und formen so die axial entlang der Aufnahmen verlaufenden Quetschrippen aus.

Zum Schäumen wird das Schaummaterial in flüssiger Form in den Formhohlraum dosiert. Der Formhohlraum wird dann durch einen Deckel verschlossen. Der Deckel ist dabei nicht druckdicht und kann Druckausgleichsöffnungen aufweisen. Das Schäumen erfolgt so drucklos. Die Seitenwände 604 werden dabei nicht verformt. Das Schaummaterial reagiert im Formhohlraum zu einem festen Schaum aus, der den Formhohlraum inklusive der Schäumkerne 602 vollständig abformt. Das Schaummaterial kann sich dabei auch fest mit den Seitenwänden verbinden. Die Schäumkerne 602 sind so ausgeführt, dass das Schaummaterial nicht an den Schäumkernen 602 fest anhaftet. Nach dem Ausreagieren wird das Modulgehäuse mit dem eingeschäumten Schaumkörper aus dem Schäumwerkzeug 600 entnommen. Die Schäumkerne 602 werden dabei wieder durch die Aussparungen 108 aus dem Schaumkörper gezogen.

Mit anderen Worten wird ein Modulgehäuse mit integrierter Zellfixierung und -positionierung sowie mit Kurzschlussschutz vorgestellt.

Um Rundzellen über einen Zellverbinder in Reihenschaltung miteinander zu verbinden, wird im Automotive-Bereich üblicherweise, anders als im Consumer-Bereich, kein auf dem Zellmantel aufgebrachter elektrisch isolierender Schrumpfschlauch verwendet. Es können durch den Entfall des Schrumpfschlauchs Material und Kosten eingespart sowie Maßtoleranzen des Systems reduziert werden.

Der Schrumpfschlauch kann jedoch eine Isolierscheibe fixieren, die im Falle der Zellkontaktierung mittels Zellverbinder notwendig sein kann. Sollten bei der Montage der Zellmodule die Zellen in axialer Richtung nicht exakt fluchten oder die Zellverbinder einen zu geringen Durchmesser aufweisen, kann der Zellboden der zweiten Zelle mit dem Zellverbinder der ersten Zelle kollidieren. Dies kann dazu führen, dass der Zellverbinder derart verbogen wird, dass dieser den Mantel der ersten Zelle und damit den Minuspol derselben Zelle berührt, was zu einem Kurzschluss und damit zur Beschädigung der Zelle führt. Daher ist es erforderlich, die Isolierscheibe auf eine andere Art und Weise an der Zelle zu fixieren, sodass sie sich auf keinen Fall vor der Montage der Module von den Zellen lösen kann. Die Isolierscheibe kann beispielsweise geklebt werden.

Wenn Module nicht über eine Positionier- und Fixiereinrichtung verfügen, kann dies dazu führen, dass die Zellen während des Betriebes innerhalb der Module "wandern"/verrutschen können. Dieses wiederum kann dazu führen, dass der Kontakt zwischen den Zellen unterbrochen wird, was entweder zu einem teilweise oder sogar gänzlichem Ausfall der Batterie führen kann. Im ungünstigsten Fall könnte ein Lichtbogen entstehen, der zu größeren Beschädigungen bis hin zum Brand der Batterie führen kann.

Durch den hier vorgestellten Ansatz werden die Zellen im Modulgehäuse in axialer Richtung positioniert und fixiert. Zusätzlich wird durch den hier vorgestellten Ansatz ein elektrischer Kurzschluss bei einer Kollision des Zellbechers einer weiteren Zelle mit dem Zellverbinder der ersten Zelle bei der Montage verhindert.

Die Zellen werden bei der Montage mit dem Pluspol zuerst in die dafür vorgesehenen Öffnungen des Moduls gesteckt. Der Durchmesser der Öffnungen kann gleich bzw. minimal größer als der Durchmesser der Zellen sein. Das Modul ist dabei derart gestaltet, dass die Zelle nur bis zur gewünschten Endposition gesteckt werden kann. Dies wird dadurch erreicht, dass die letzte Öffnung kleiner ist, als die Zelle. In diesem Fall schaut der Pluspol der Zelle aus dieser Öffnung heraus; der Mantel (und damit der Minuspol) wird durch die kleinere Gehäuseöffnung verdeckt. Die Öffnung ist dabei so groß, dass eine Montage des Zellverbinders (z.B. mittels schweißen) möglich ist. Die Öffnung ist so klein genug, um die Becherschulter der Zelle zu verdecken.

Durch den hier vorgestellten Ansatz wird eine Einsparung von Material erreicht, da keine Isolierscheiben verwendet werden. Weiterhin wird ein Gewinn an elektrischer Sicherheit erreicht. Es ergeben sich Vorteile bezüglich der mechanischen Sicherheit, da eine definierte Zelllage erreicht wird.

Zur Positionierung und Fixierung der Zellen in axialer Richtung wird ein Schaumkörper mit den entsprechenden Öffnungen zur Aufnahme der Zellen verwendet. Zur vereinfachten Herstellung weist der Durchbruch im Modulgehäuse eine besondere Form auf. Dadurch können die Schaumkerne in Richtung der geschlossenen Werkzeug-Gehäuseseite entformt werden. So kann in die offene Form des Werkzeuges geschäumt werden.

Der Durchbruch am Pluspol ist dabei trotzdem kleiner als der Zelldurchmesser. Durch den vorgestellten Ansatz kann der Schaumkern, der ja mehr oder weniger den Zelldurchmesser hat, durch ein kleineres Loch gezogen werden, das den Isolator bzw. den Anschlag darstellt.

Die hier vorgestellte Lösung ist, keinen geschlossenen Ring als Anschlag und Isolator zu verwenden, sondern nur partielle Verengungen über den Umfang. Der Schaumkern weist damit also entsprechende Nuten auf, die sich im Schaum selbst dann als "Quetschrippen" darstellen und so zusätzlich zur Fixierung der Zelle dienen. Die Anschläge sind dabei genau an den Stellen positioniert, an denen sich auch Material der Zellkrone befindet, denn in Bereichen zwischen den Kontaktfedern der Zellkrone und den Verbindungsstegen zur nächsten Zellkrone kann dann kein Kurzschluss zum Zellmantel entstehen. Somit sind die Anschläge bei Ansicht von oben mehr oder weniger durch die Zellkrone verdeckt.

In Fig. 4 ist eine vereinfachte Darstellung eines Modulgehäuses zu sehen. Die Isolatoren und Anschläge sind die 10 kleinen Ausbuchtungen in den 36 Kreisen. Sie haben definierte Positionen, die sich aus der Geometrie der Zellkronen ergeben.

So sind Ausbuchtungen für die Kontaktfedern der Zellkronen an den Positionen 0:30, 1:30, 4:30, 5:30, 6:30, 7:30, 10:30 und 11:30 Uhr angeordnet. Weiterhin sind Ausbuchtungen zum Isolieren der Verbindungsstege der Zellkronen an den Positionen 3:00 und 9:00 Uhr angeordnet.

In Fig. 6 ist ein schematischer Aufbau eines Schäumwerkzeugs dargestellt. Es weist eine im Wesentlichen rechteckige Kavität mit 36 Schaumkernen auf. Somit kann ein Modulgehäuse mit der Öffnung nach oben zeigend in diese Kavität eingelegt werden. In der Folge wird mittels Mischanlage konditioniertes Polyol-Isocyanat-Gemisch in der passenden Menge in die offene Form dosiert und dann das Werkzeug mit einer entsprechenden Abdeckung verschlossen. Die Masse fängt jetzt an zu reagieren und dehnt sich dabei aus, wodurch sie den gesamten Hohlraum des Modulgehäuses auffüllt. Nachdem der Schaum ausreagiert hat, kann der Deckel wieder geöffnet werden und das fertig geschäumte Modulgehäuse aus der Kavität entnommen werden. Das Resultat ist ein Gehäuse mit einer harten Außenschale und weichen Löchern im Inneren, die sodann die Zellen aufnehmen.

Die entstandenen Rippen dienen dazu, die Zellen radial zu fixieren, indem sich der Schaum an den Zelldurchmesser exakt anpasst, wenn die Zellen in das Loch eingeführt werden. Die Rippen ergeben dabei ein kleines "Verdrängungsvolumen" mit kleinen Fügekräften. Würde dagegen eine Zelle in ein kreisrundes Loch gedrückt werden, welches auf den kleinstmöglichen Durchmesser einer Zelle abgestimmt ist, dann wären die Kräfte bei einer Zelle mit einem Durchmesser an der oberen Toleranzgrenze wesentlich höher, da das Verdrängungsvolumen größer wäre. Die Fixierung mit Rippen ist weniger toleranzanfällig als eine Fixierung ohne Rippen.

Da es sich bei der vorhergehend detailliert beschriebenen Vorrichtungen und Verfahren um Ausführungsbeispiele handelt, können sie in üblicher Weise vom Fachmann in einem weiten Umfang modifiziert werden. Insbesondere sind die mechanischen Anordnungen und die Größenverhältnisse der einzelnen Elemente zueinander lediglich beispielhaft gewählt.

### BEZUGSZEICHENLISTE

- 100: Modulgehäuse
- 102: Schaumkörper
- 104: Aufnahme
- 106: Anschlag
- 108: Aussparung
- 110: Gehäusehälfte
- 112: Reihe
- 114: Durchgangsöffnung
- 116: Verbindungskontur

- 200: Batteriemodul
- 202: Rundzelle
- 204: Zellbecher
- 206: Minuspol
- 208: Pluspol
- 210: Zellverbinder

- 300: Prägung
- 302: Kontaktfeder
- 304: Einführschräge

- 400: lichte Weite
- 402: Quetschrippe

- 500: Verbindungssteg

- 600: Schäumwerkzeug
- 602: Schäumkern
- 604: Seitenwand
- 606: Nut

## Patentansprüche

1. Modulgehäuse (100) aus einem elektrisch isolierenden Kunststoffmaterial, mit einem Schaumkörper (102) aus einem elektrisch isolierenden Schaummaterial, wobei der Schaumkörper (102) im Wesentlichen zylindrische Aufnahmen (104) für Rundzellen (202) aufweist, wobei das Modulgehäuse (100) an den Aufnahmen (104) ausgerichtete axiale Anschläge (106) für Zellbecher (204) der Rundzellen (202) und Aussparungen (108) für Pluspole (208) der Rundzellen (202) aufweist, wobei der Schaumkörper (102) pro Aufnahme (104) mehrere axial entlang der Aufnahme (104) verlaufende Quetschrippen (402) aufweist.

2. Modulgehäuse (100) gemäß Anspruch 1, mit an den Aufnahmen (104) ausgerichteten Durchgangsöffnungen (114) für die Rundzellen (202), wobei ein Anschlag (106) und eine Durchgangsöffnung (114) je auf entgegengesetzten Seiten einer Aufnahme (104) angeordnet sind.

3. Modulgehäuse (100) gemäß Anspruch 2, mit zwei Gehäusehälften (110), wobei der Schaumkörper (102) zwischen den Gehäusehälften (110) angeordnet ist, wobei in jeder Gehäusehälfte (110) die Anschläge (106) und die Durchgangsöffnungen (114) in Reihen (112) nebeneinander angeordnet sind, wobei jeweils Reihen (112) von Anschlägen (106) und Durchgangsöffnungen (114) abwechseln.

4. Modulgehäuse (100) gemäß einem der vorhergehenden Ansprüche, mit einer zumindest auf einer Gehäuseseite angeordneten Verbindungskontur (116) zum Verbinden mit einem gleichartig ausgeführten weiteren Modulgehäuse (100).

5. Batteriemodul (200) mit zumindest einem Modulgehäuse (100) gemäß einem der vorhergehenden Ansprüche, wobei pro Aufnahme (104) eine Rundzelle (202) im Schaumkörper (102) angeordnet ist, wobei Zellbecher (204) der Rundzellen (202) an einer Innenseite der Anschläge (106) anliegen und Pluspole (208) der Rundzellen (202) in den Aussparungen (108) angeordnet sind, wobei auf einer Außenseite der Anschläge (106) Zellverbinder (210) anliegen, die elektrisch leitend mit den Pluspolen (208) verbunden sind, wobei die Zellverbinder (210) durch die Anschläge (106) von den Zellbechern (204) elektrisch isoliert sind.

6. Batteriemodul (200) gemäß Anspruch 5, mit einem Modulgehäuse (100) gemäß einem der Ansprüche 2 bis 4, bei dem die Zellverbinder (210) auf einer den Rundzellen (202) abgewandten Seite kronenförmig ausgerichtete Kontaktfedern (302) aufweisen, wobei zwischen einer Kontaktfeder (302) und dem Zellbecher (204) je ein Anschlag (106) angeordnet ist.

7. Verfahren zum Herstellen eines Modulgehäuses (100) gemäß einem der vorhergehenden Ansprüche 1 bis 4, wobei das Modulgehäuse (100) mit den Anschlägen (106) und Aussparungen (108) aus einem elektrisch isolierenden Kunststoffmaterial gefertigt wird und der Schaumkörper (102) mit den Aufnahmen (104) in einem Schäumwerkzeug (600) aus einem elektrisch isolierenden Schaummaterial geschäumt wird.

8. Verfahren gemäß Anspruch 7, bei dem das Modulgehäuse (100) mit den Anschlägen (106) voraus in dem Schäumwerkzeug (600) angeordnet wird, wobei das Schaummaterial in einen Innenraum des Modulgehäuses (100) dosiert wird und das Modulgehäuse (100) nach einer Reaktion des Schaummaterials mit dem Schaumkörper (102) aus dem Schäumwerkzeug (600) entnommen wird, wobei die Aufnahmen (104) abbildende Schäumkerne (602) des Schäumwerkzeugs (600) durch die Aussparungen (108) aus den Aufnahmen (104) gezogen werden.

## Claims

1. Module housing (100) made of an electrically insulating plastic material, with a foam body (102) made of an electrically insulating foam material,
wherein the foam body (102) comprises substantially cylindrical receptacles (104) for round cells (202),
wherein the module housing (100) comprises, at the receptacles (104), axially aligned stops (106) for cell cups (204) of the round cells (202) and recesses (108) for positive terminals (208) of the round cells (202),
wherein the foam body (102) comprises, per receptacle (104), a plurality of axially extending along the receptacle (104) crush ribs (402).

2. Module housing (100) according to claim 1, with through-openings (114) aligned with the receptacles (104) for the round cells (202),
wherein a stop (106) and a through-opening (114) are each arranged on opposite sides of a receptacle (104).

3. Module housing (100) according to claim 2, with two housing halves (110),
wherein the foam body (102) is arranged between the housing halves (110), wherein in each housing half (110) the stops (106) and the through-openings (114) are arranged in rows (112) next to one another,
wherein rows (112) of stops (106) and through-openings (114) alternate.

4. Module housing (100) according to one of the preceding claims, with a connecting contour (116) arranged on at least one housing side for connecting with a further module housing (100) of identical design.

5. Battery module (200) with at least one module housing (100) according to one of the preceding claims,
wherein a round cell (202) is arranged in the foam body (102) per receptacle (104), wherein cell cups (204) of the round cells (202) rest on an inner side of the stops (106) and positive terminals (208) of the round cells (202) are arranged in the recesses (108),
wherein on an outer side of the stops (106) cell connectors (210) rest, which are electrically conductively connected with the positive terminals (208),
wherein the cell connectors (210) are electrically insulated from the cell cups (204) by the stops (106).

6. Battery module (200) according to claim 5, with a module housing (100) according to one of claims 2 to 4,
wherein the cell connectors (210) on a side facing away from the round cells (202) comprise crown-shaped arranged contact springs (302),
wherein between a contact spring (302) and the cell cup (204) a stop (106) is arranged in each case.

7. Method for producing a module housing (100) according to one of the preceding claims 1 to 4,
wherein the module housing (100) with the stops (106) and recesses (108) is manufactured from an electrically insulating plastic material,
and the foam body (102) with the receptacles (104) is foamed in a foaming tool (600) from an electrically insulating foam material.

8. Method according to claim 7,
wherein the module housing (100) with the stops (106) first is arranged in the foaming tool (600),
wherein the foam material is dosed into an inner space of the module housing (100) and the module housing (100), after a reaction of the foam material with the foam body (102), is removed from the foaming tool (600),
wherein foaming cores (602) of the foaming tool (600) representing the receptacles (104) are pulled out of the receptacles (104) through the recesses (108).

## Revendications

1. Boîtier de module (100) en un matériau plastique électriquement isolant, avec un corps en mousse (102) en un matériau de mousse électriquement isolant,
le corps en mousse (102) présentant des logements (104) sensiblement cylindriques pour des cellules rondes (202),
le boîtier de module (100) présentant, au niveau des logements (104), des butées axiales (106) alignées pour des godets de cellule (204) des cellules rondes (202) et des évidements (108) pour des pôles positifs (208) des cellules rondes (202),
le corps en mousse (102) présentant, par logement (104), plusieurs nervures d'écrasement (402) s'étendant axialement le long du logement (104).

2. Boîtier de module (100) selon la revendication 1, avec des ouvertures traversantes (114) alignées avec les logements (104) pour les cellules rondes (202),
une butée (106) et une ouverture traversante (114) étant disposées respectivement sur des côtés opposés d'un logement (104).

3. Boîtier de module (100) selon la revendication 2, avec deux demi-coquilles de boîtier (110),
le corps en mousse (102) étant disposé entre les demi-coquilles de boîtier (110),
les butées (106) et les ouvertures traversantes (114) étant disposées en rangées (112) les unes à côté des autres dans chaque demi-coquille de boîtier (110),
des rangées (112) de butées (106) et des ouvertures traversantes (114) alternant.

4. Boîtier de module (100) selon l'une des revendications précédentes, avec un contour de raccordement (116) disposé sur au moins un côté de boîtier pour le raccordement avec un autre boîtier de module (100) de conception similaire.

5. Module de batterie (200) avec au moins un boîtier de module (100) selon l'une des revendications précédentes,
une cellule ronde (202) étant disposée dans le corps en mousse (102) par logement (104),
des godets de cellule (204) des cellules rondes (202) étant appliqués contre un côté intérieur des butées (106) et des pôles positifs (208) des cellules rondes (202) étant disposés dans les évidements (108),
des barrettes de connexion de cellules (210) étant appliquées contre un côté extérieur des butées (106), lesdites barrettes de connexion (210) étant reliées électriquement de manière conductrice aux pôles positifs (208),
les barrettes de connexion (210) étant électriquement isolées des godets de cellule (204) par les butées (106).

6. Module de batterie (200) selon la revendication 5, avec un boîtier de module (100) selon l'une des revendications 2 à 4,
les barrettes de connexion (210) présentant, sur un côté tourné à l'opposé des cellules rondes (202), des ressorts de contact (302) orientés en forme de couronne, un arrêt (106) étant disposé dans chaque cas entre un ressort de contact (302) et le godet de cellule (204).

7. Procédé de fabrication d'un boîtier de module (100) selon l'une des revendications précédentes 1 à 4,
le boîtier de module (100) avec les butées (106) et les évidements (108) étant fabriqué en un matériau plastique électriquement isolant,
et le corps en mousse (102) avec les logements (104) étant moussés dans un outil de moussage (600) en un matériau de mousse électriquement isolant.

8. Procédé selon la revendication 7,
le boîtier de module (100) avec les butées (106) étant disposé en premier dans l'outil de moussage (600),
le matériau de mousse étant dosé dans un espace intérieur du boîtier de module (100), et le boîtier de module (100), après une réaction du matériau de mousse avec le corps en mousse (102), étant retiré de l'outil de moussage (600),
des noyaux de moussage (602) de l'outil de moussage (600) représentant les logements (104) étant retirés des logements (104) à travers les évidements (108).
